# EUROPÄISCHE PATENTANMELDUNG

(11) **EP 0 717 950 A1**
(43) Veröffentlichungstag der Anmeldung: **26.06.1996**
(21) Anmeldenummer: 95117615.5
(22) Anmeldetag: 08.11.1995
(51) Int. Cl.: A47J 47/02, A47J 36/20, A47G 19/30

(54) **Behälter**

(30) Priorität: 22.12.1994 DE 9420567 U
(71) Anmelder: EMSA-Werke Wulf GmbH & Co., D-48282 Emsdetten (DE)
(72) Erfinder: Wulf, Christian, D-48282 Emsdetten (DE)
(74) Vertreter: Grünecker, Kinkeldey, Stockmair & Schwanhäusser Anwaltssozietät

(57) **Zusammenfassung**

Ein Behälter (1) mit wenigstens einem Einsatz (2) und einem wahlweise auf Einsatz (2) oder Behälter (1) aufsetzbaren Deckel (3), wobei Behälter, Einsatz und Deckel mit sich aufeinander abstützenden Rändern (4, 5, 6) und Griffbereichen (7, 8, 9) zum wahlweisen Ergreifen von Behälter, Einsatz oder Deckel ausgebildet sind, soll dahingehend verbessert werden, daß in konstruktiv einfacher und sicherer Weise ein wahlweises Ergreifen von Behälter, Einsatz oder Deckel möglich ist. Dies wird erfindungsgemäß dadurch gelöst, daß die Griffbereiche (7, 8, 9) durch wenigstens einen Griffabschnitt (10, 11, 12) der Ränder (4, 5, 6) gebildet sind, in welchen der Deckelrand (6) über den Einsatzrand (5) und dieser über den Behälterrand (4) nach außen vorsteht.

## Beschreibung

Die Erfindung betrifft einen Behälter mit wenigstens einem Einsatz und einem wahlweise auf Einsatz oder Behälter aufsitzbaren Deckel, wobei Behälter, Einsatz und Deckel mit sich aufeinander abstützenden Rändern und Griffbereichen zum wahlweisen Ergreifen von Behälter, Einsatz oder Deckel ausgebildet sind.

Ein solcher Behälter ist aus der DE 28 21 208 C3 bekannt. Der vorbekannte Behälter ist ein nach oben offenes Gefäß, in welches der Einsatz einsetzbar ist. Das Gefäß weist einen als Lagerfläche ausgebildeten Rand auf, auf den eine am Rand des Einsatzes ausgebildete Umfangslippe aufsetzbar ist. Weiterhin ist eine untere Abschlußkante eines Randes des Deckels auf die Umfangslippe des Einsatzes oder wahlweise auf die Lagerfläche des Behälters bei herausgenommenen Einsatz aufsetzbar. Auf diese Weise stützen sich die Ränder von Behälter, Einsatz und Deckel aufeinander ab. Ein solcher Behälter mit Einsatz und Deckel wird vorzugsweise zum Servieren, Auftauen von Tiefkühlkost oder Aufbewahren von Nahrungsmitteln verwendet.

Um den Deckel vom Behälter mit oder ohne Einsatz und um den Einsatz mit oder ohne Deckel aus dem Behälter ab- bzw. herauszunehmen, sind entsprechende Griffbereiche angeordnet. Der Deckel weist als Griffbereich beispielsweise ein Griffteil in etwa mittig auf seiner Oberseite auf. Der Griffbereich des Einsatzes ist im wesentlichen dessen oberer Rand, der aus dem Behälter vorsteht. Zum Tragen des Behälters mit oder ohne Einsatz und Deckel sind an diesem seitliche Griffteile als Griffbereiche ausgebildet.

Nachteilig bei dem vorbekannten Behälter ist, daß der Einsatz nur umständlich aus dem Behälter herausnehmbar ist und für Deckel und Behälter separate Griffteile vorgesehen werden müssen. Dadurch ist der Aufbau von Behälter mit Einsatz und Deckel relativ aufwendig.

Der Erfindung liegt daher die Aufgabe zugrunde, einen Behälter der eingangs genannten Art dahingehend zu verbessern, daß in konstruktiv einfacher und sicherer Weise ein wahlweises ergreifen von Behälter, Einsatz oder Deckel möglich ist.

Diese Aufgabe wird bei einem Behälter mit den Merkmalen des Oberbegriffs des Anspruchs 1 dadurch gelöst, daß die Griffbereiche durch wenigstens einen Griffabschnitt der Ränder gebildet sind, in welchem der Deckelrand über den Einsatzrand und dieser über den Behälterrand nach außen vorsteht. Im Gegensatz zu dem Gegenstand nach DE 28 21 208 C3 sind somit keine separaten Griffteile erforderlich. Weiterhin ist durch die unterschiedliche Erstreckung der Ränder nach außen sowohl der Deckel als auch der Einsatz mit oder ohne Deckel leicht vom Einsatz bzw. aus dem Behälter abnehmbar bzw. herausnehmbar. Soll beispielsweise nur der Deckel entfernt werden, wird der den Einsatzrand überragende Deckelrand untergriffen und der Deckel abgehoben. Soll der Einsatz mit aufgelegtem Deckel entfernt werden, wird der den Behälterrand überragende Einsatzrand untergriffen und der Einsatz mit dem Deckel aus dem Behälter herausgenommen.

Von Vorteil ist in diesem Zusammenhang, wenn zwei solcher Griffabschnitte auf gegenüberliegenden Seiten von Behälter, Einsatz und Deckel ausgebildet sind. Die Herstellung der Griffabschnitte kann direkt beim Herstellen von Behälter, Einsatz oder Deckel erfolgen. Ebenso ist es möglich, die Griffabschnitte nachträglich durch entsprechende Kürzung der ansonsten gleichförmigen Ränder herzustellen, wobei nur eine Kürzung von Einsatz- und Behälterrand erfolgen muß.

Bevorzugt stehen die Ränder zumindest im Griffabschnitt im wesentlichen nach außen ab und liegen flach aufeinander. Solche Ränder sind einfach herstellbar.

Um ein verbessertes Aufeinanderliegen der Ränder zu ermöglichen und gleichzeitig eine verbesserte Abdichtung von Einsatz und Behälter zu erreichen, ist es weiterhin günstig, wenn Deckelrand und/oder Einsatzrand und/oder Behälterrand jeweils entlang des gesamten Umfangs nach außen abstehen. Deckelrand und Einsatzrand bzw. Behälterrand und Einsatzrand und Behälterrand können dabei entsprechend entlang des gesamten Umfangs aufeinander liegen.

Die Ränder können vom Deckel, Einsatz oder Behälter beispielsweise geneigt nach oben oder nach unten abstehen. Bevorzugt ist eine horizontale Anordnung der Ränder.

Neben den Griffabschnitten zum wahlweisen Untergreifen von Deckelrand, Einsatzrand oder Behälterrand können weitere Griffabschnitte entlang des Umfangs vorgesehen sein. Ein solcher Griffabschnitt kann beispielsweise dazu vorgesehen sein, Einsatz und Deckel jeweils nur zusammen aus dem Behälter zu entnehmen. In diesem Fall ist nur der Behälterrand gegenüber den Einsatzrand nach innen versetzt, wobei Deckelrand und Einsatzrand sich gleichweit nach außen erstrecken können oder beispielsweise auch der Deckelrand gegenüber dem Einsatzrand nach innen versetzt enden kann. Ebenso kann es von Vorteil sein, wenn beispielsweise bei abgenommenem Deckel der Einsatzrand gegenüber dem Behälterrand nach innen versetzt endet. Durch die umgekehrten Längenverhältnisse der Ränder in diesem weiteren Griffabschnitt ist sichergestellt, daß bei Verwendung dieses Griffabschnittes beispielsweise Deckel und Einsatz zusammen bzw. nur der Deckel angehoben werden.

Die Ausbildung der Ränder für die Griffabschnitte zum wahlweisen Entnehmen und für den wenigstens einen weiteren Griffabschnitt können vielfach kombiniert werden, wobei sich insbesondere weitere Kombinationen bei Verwendung mehr als eines Einsatzes ergeben.

Die Griffabschnitte können ebenso Bereiche von Rändern umfassen, in denen diese fluchtend übereinander angeordnet sind. Eine entsprechende Staffelung der Länge der Ränder nach außen muß nur in einem bestimmten Teil des Griffabschnittes realisiert werden. Beispielsweise können die Ränder entlang ihrer miteinander fluchtenden Außenkanten konvex nach außen gekrümmt sein, wodurch sich eine insgesamt ästhetische Außenanischt ergibt.

In diesem Zusammenhang ist es insbesondere von Vorteil, wenn der Einsatzrand zwischen den miteinander fluchtenden Außenkanten eine erste im wesentlichen geradlinig verlaufende Randkante und der Behälterrand eine zweite nach außen konkav gekrümmte Randkante aufweist. Diese können aus einem insgesamt konvex gekrümmten Außenrand, wie er beispielsweise beim Deckelrand verwendbar ist, in einfacher Weise hergestellt werden. Die erste Randkante kann durch einfaches Abtrennen eines konvex gekrümmten Endabschnitts des Einsatzrandes gebildet werden. Die konkav nach außen gekrümmte Randkante des Behälterrandes kann in analoger Weise durch Abtrennen eines entsprechenden Teils eines konvex gekrümmten Behälterrandes gebildet werden. Bis auf diese abgetrennten Teile können die Ränder gleich ausgebildet sein.

Um auf möglichst geringem Raum innerhalb der verschiedenen Ränder und mit möglichst geringem Aufwand ein sicheres Untergreifen eines jeden Randes zu ermöglichen, ist es von Vorteil, wenn sich erste und zweite Randkante in Querrichtung des Behälters gleich weit erstrecken. Dadurch ist bei sonst fluchtender Anordnung der Ränder der im Griffabschnitt über den Behälterrand vorstehende Einsatzrand maximal.

Um Deckel, Einsatz oder Behälter sowohl zusammen als auch einzeln mittels ihres Randes insbesondere in den Griffabschnitten besser ergreifen zu können, sind reibungshöhende Oberflächenstrukturen von Vorteil, welche Deckelrand und/oder Einsatzrand und/oder Behälterrand auf Ober- und/oder Unterseite in den Griffabschnitten aufweisen.

Um insbesondere beim Transportieren ein seitliches Verrutschen des Deckels oder auch des Einsatzes gegenüber Einsatz und Behälter zu verhindern, sind auf der Unterseite vom Deckelrand und/oder vom Einsatzrand zumindest stellenweise Haltevorsprünge zur seitlichen Halterung des Deckels auf dem Einsatz oder Behälter bzw. zur seitlichen Halterung des Einsatzes im Behälter ausgebildet. Die Haltevorsprünge können sich bei einem Ausführungsbeispiel entlang des gesamten Umfangs oder entlang des gesamten Randes in Umfangsrichtung erstrecken. Die Haltevorsprünge können dabei in entsprechende Vertiefungen in der Oberseite des Einsatzrandes und/oder des Behälterrandes eingreifen. Ebenso können die Vorsprünge soweit in den Einsatz bzw. Behälter hineinragen, daß sie von innen an deren Seitenwänden anliegen.

Bei einem bevorzugten Ausführungsbeipiel der Erfindung ist der Einsatz als Siebeinsatz ausgebildet. Der Siebeinsatz kann beispielsweise in seinem Boden eine Anzahl von Bohrungen und/oder in seinen Seitenwänden eine Anzahl von Schlitzen aufweisen, wobei durch die Bohrungen und/oder Schlitze Flüssigkeit aus dem Einsatz in den Behälter abfließt. Auf diese Weise kann Flüssigkeit von einem vom Waschen oder Kochen nassen Nahrungsmittel abtropfen.

In diesem Zusammenhang ist es insbesondere von Vorteil, wenn der Siebeinsatz beabstandet zum Boden des Behälters mittels des auf den Behälterrandes aufliegenden Einsatzrandes angeordnet ist. Dadurch kann mehr Flüssigkeit aus dem Siebeinsatz in den Behälter laufen. Weiterhin kann eine Trennung von Nahrungsmittel und abgetropfter Flüssigkeit insbesondere beim Auftauen von Tiefkühlkost in sicherer Weise erfolgen.

Bei einem einfachen Ausführungsbeispiel sind Haltevorsprung und Vertiefung des Einsatzrandes sowie die Vertiefung des Behälterrandes als Stufen ausgebildet, wobei beim Einsatzrand Haltevorsprung und Vertiefung durch Anordnung einer Stufe im Rand herstellbar sind.

Behälter, Einsatz und Deckel werden vorzugsweise aus einem Kunststoffmaterial hergestellt. Weiterhin kann der Deckel so ausgebildet sein, daß er sowohl mit Oberseite als auch Unterseite des Deckelrandes auf Oberseite vom Einsatz bzw. Behälter auflegbar ist. Weiterhin ist es möglich, den Deckel als tablettartigen Untersatz für Behälter und/oder Einsatz zu verwenden, um beispielsweise auch weitere Abtropfflüssigkeit aufzufangen.

Im folgenden wird ein vorteilhaftes Ausführungsbeispiel der Erfindung anhand der in der Zeichnung beigefügten Figuren näher erläutert und beschrieben.

Es zeigen:
- Fig. 1: eine Draufsicht auf einen Deckel;
- Fig. 2: einen Schnitt entlang der Linie II-II aus Figur 1;
- Fig. 3: eine Draufsicht auf einen Einsatz;
- Fig. 4: einen Schnitt entlang der Linie IV-IV aus Figur 3;
- Fig. 5: eine Draufsicht auf einen Behälter;
- Fig. 6: einen Schnitt entlang der Linie V-V aus Figur 4; und
- Fig. 7: einen Behälter nach Figur 5 mit teilweise eingesetztem Einsatz nach Figur 3 und teilweise aufgesetztem Deckel nach Figur 1.

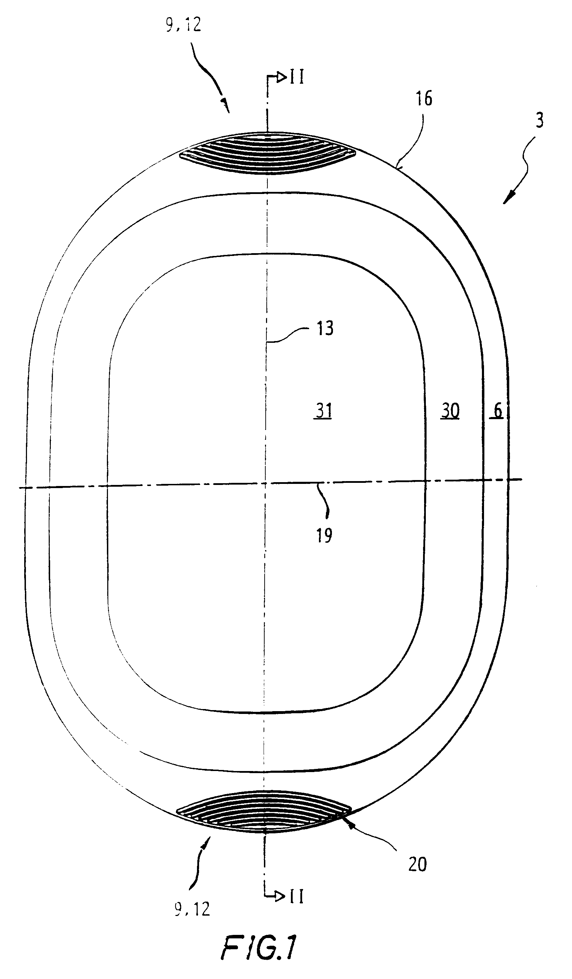

Ein Deckel 3 ist nach Figur 1 in etwa oval geformt. Der Deckel ist entlang seines gesamten Umfangs von einem Deckelrand 6 umgeben. Dieser weist beidseitig in Längsrichtung 13 des Deckels 3 als Griffabschnitte 12 des Deckelsrandes 6 ausgebildete Griffbereiche 9 auf. Durch diese ist der Deckel 3 von dem später beschriebenen Einsatz und/oder Behälter abhebbar.

An den Deckelrand 6 schließt sich eine gewölbte Seitenwand 30 an, die eine ebene Oberseite 31 umgibt.

In dem Griffabschnitt 12 weist der Deckel 3 eine reibungserhöhende Oberflächenstruktur 20 auf, die aus Erhöhungen oder Vertiefungen besteht. Diese sind in Längsrichtung 13 benachbart zueinander angeordnet.

Der Deckel 3 ist wie der später beschriebene Einsatz und Behälter achsensymmetrisch zur Längsrichtung 13 und zu einer Querrichtung 19 ausgebildet.

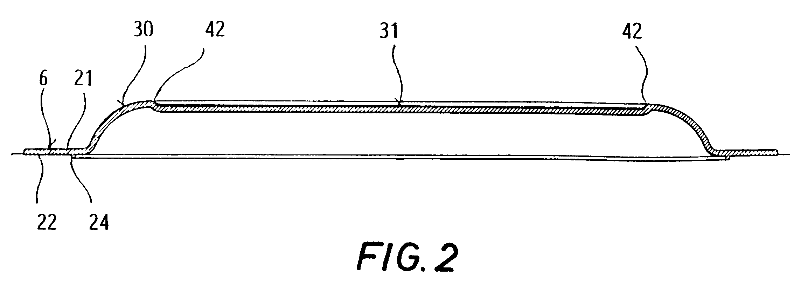

Figur 2 stellt einen Schnitt entlang der Längsrichtung 13 dar. Die Oberseite 31 ist gegenüber inneren Enden 42 der Seitenwand 30 vertieft angeordnet. Die Seitenwand 30 krümmt sich von ihrem inneren Ende 42 nach außen und nach unten und geht in den horizontal ausgerichteten Deckelrand 6 über. Dieser weist auf seiner Oberseite 21 die Oberflächenstruktur 20 (nicht dargestellt) auf. Auf seiner Unterseite 22 weist der Deckelrand 6 einen umlaufenden Haltevorsprung 24 auf. Dieser steht senkrecht vom Deckelrand 6 nach unten ab.

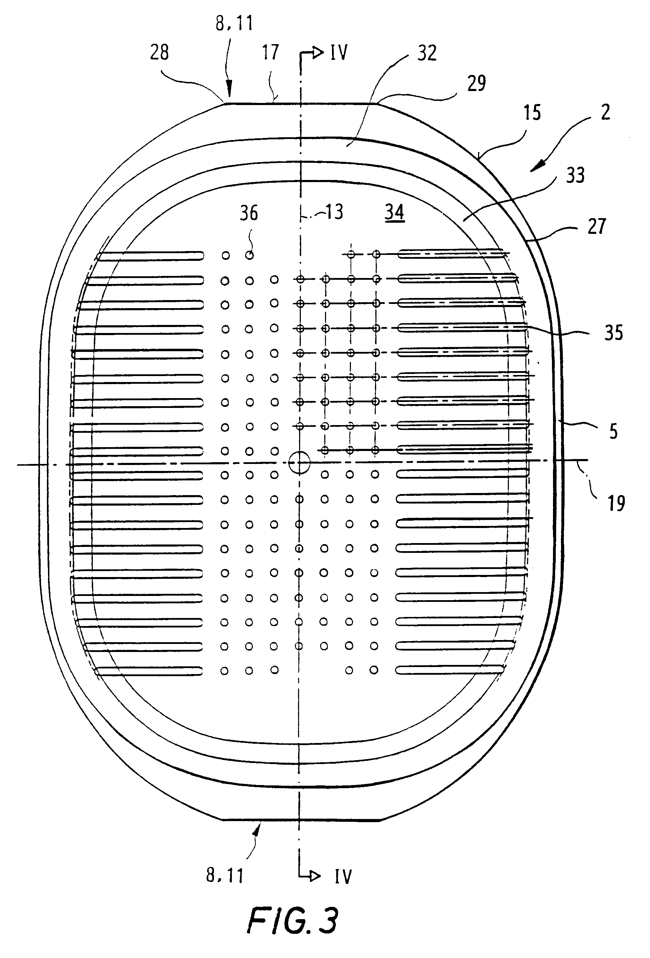

Der Einsatz 2 nach Figur 3 ist ebenfalls oval geformt und weist einen Einsatzrand 5 auf, der beidseitig in Längsrichtung 13 als Griffbereiche 8 dienende Griffabschnitte 11 aufweist.

Im Griffabschnitt 11 ist eine konvex nach außen gewölbte Außenkante 15 des Einsatzrandes 5 zwischen Endpunkten 28 und 29 gradlinig und parallel zur Querrichtung 19 unter Bildung einer ersten Randkante 17 unterbrochen.

An den Einsatzrand 5 schließt sich zum Inneren des Behälters 2 über einen stufenförmigen Absatz 27 eine Randwölbung 32 an. Auf diese folgt eine Innenwand 33 die relativ steil nach unten, das heißt in die Figurenebene nach Figur 3 hinein, bis zu einem ebenen Boden 34 verläuft. In dem Boden 34 sind mehrere Reihen von Löchern 36 ausgebildet, die sich parallel zur Längsrichtung 13 bzw. zur Querrichtung 19 erstrecken. In Querrichtung 19 schließen sich an die Lochreihen Schlitze 35 an, die parallel zur Querrichtung 19 teilweise im Boden 34, in der Innenwand 33 und in der Randwölbung 32 verlaufen.

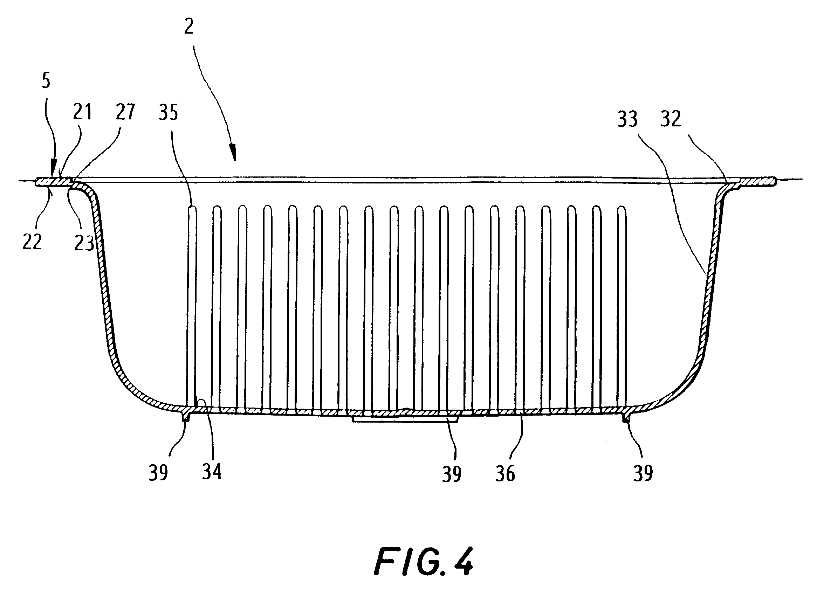

In dem Schnitt nach Figur 4 entlang der Längsrichtung 13 aus Figur 3 ist erkennbar, daß dem stufenförmigen Absatz 27 auf der Oberseite 21 des Einsatzrandes 5 ein stufenförmiger Absatz auf der Unterseite 22 gegenüberliegt. Der Einsatzrand 5 verläuft wie der Deckelrand 6 nach Figur 2 horizontal.

Die im Einsatz 2 gebildeten Schlitze 35 erstrecken sich gleich weit in Richtung zur offenen Oberseite des Einsatzes 2 und enden im Boden 34, siehe Figur 3. Zwischen den in beiden Längsseiten des Einsatzes 2 ausgebildeten Schlitzen erstrecken sich die Reihen von Löchern 36 im Boden 34. Die Randwölbung 32 verläuft nach innen und unten und weist in etwa eine viertelkreisförmige Form auf. An die Randwölbung schließt sich die im wesentlichen gradlinig steil nach unten verlaufende Innenwand 33 an. Diese geht über eine viertelkreisförmige Krümmung in den Boden 34 über. Auf einer Unterseite des Bodens 34 sind Fußleisten 39 ausgebildet, die sich in Längsrichtung bzw. in Querrichtung erstrecken und einander gegenüberliegen.

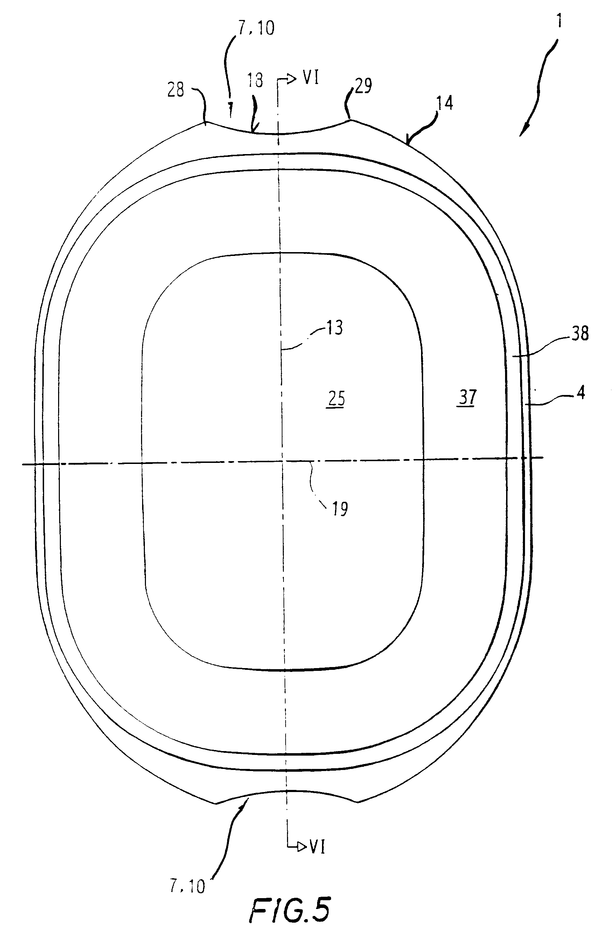

In Figur 5 ist der Behälter 1 dargestellt, der ebenfalls wie Einsatz 2 und Deckel 3 nach Figur 3 bzw. 1 oval geformt ist. Der Behälter 1 ist mit einem umlaufenden Behälterrand 4 ausgebildet. Dieser weist beidseitig in Längsrichtung 13 Griffabschnitte 10 als Griffbereiche 7 auf. In den Griffabschnitten 10 ist eine nach außen konvex gekrümmte Außenkante 14 des Behälterrandes 4 zwischen den Endpunkten 28 und 29 durch eine nach außen konkav gekrümmte zweite Randkante 28 unterbrochen.

An den Behälterrand 4 schließt sich zum Behälterinneren eine Randwölbung 38 und eine steil nach unten verlaufende Innenwand 37 an, welche einen ebenen Behälterboden 25 umgiebt.

Wie bereits Einsatz 2 nach Figur 3 und Deckel 3 nach Figur 1 ist der Behälter 1 achsensymmetrisch sowohl zur Längsrichtung 13 als auch zur Querrichtung 19.

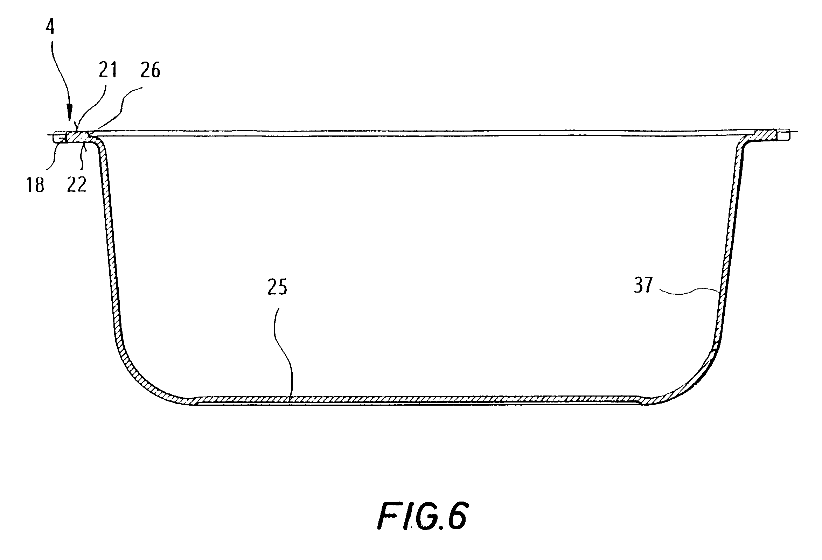

Bei dem Schnitt nach Figur 6 entlang der Längsrichtung 13 ist erkennbar, daß der Rand 4 auf seiner Oberseite 21 einen stufenförmigen Absatz 26 aufweist. Die Randunterseite 22 erstreckt sich horizontal.

Behälterrand 4, Einsatzrand 5 und Deckelrand 6, siehe Figuren 5, 3 und 1, erstrecken sich bis auf die Bereiche von erster und zweiter Randkante 27 bzw. 28 gleich weit nach außen und fluchten bei in den Behälter 1 eingesetztem Einsatz und bei aufgesetztem Deckel miteinander. Die Außenkanten 14, 15 bzw. 16 weisen entsprechend gleiche Krümmungen auf. Die erste Randkante 17 des Einsatzes 2 ergibt sich beispielsweise dadurch, daß die Außenkante 15 zwischen den Endpunkten 28 und 29 parallel zur Querrichtung 19 entfernt ist. Die zweite Randkante 18 des Behälters 1 ergibt sich dadurch, daß die Außenkante 14 zwischen den Endpunkten 28 und 29 mit entsprechender konkaver Krümmung entfernt ist.

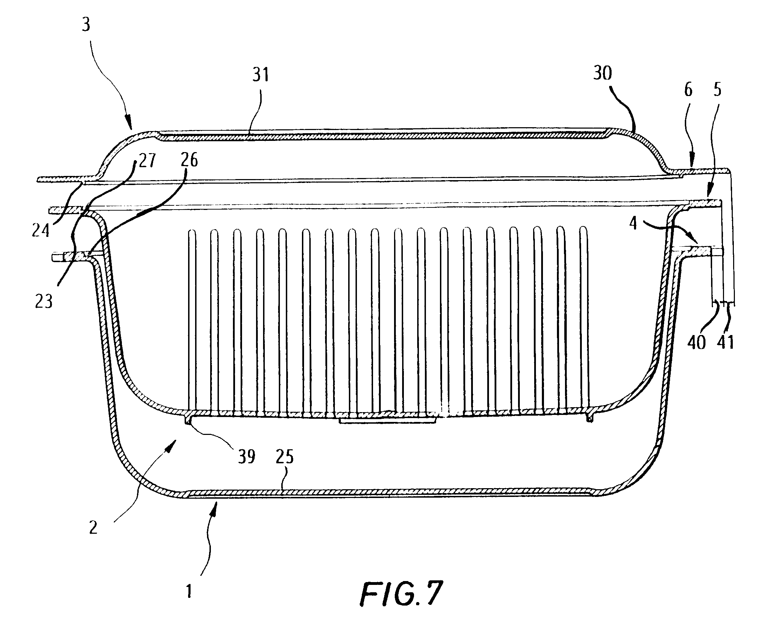

Im folgenden ist in Figur 7 ein Behälter 1 mit teilweise eingesetztem Einsatz 2 und von diesem abgehobenem Deckel 3 dargestellt. Gleiche Bezugszeichen kennzeichnen gleiche Teile und werden nur noch teilweise erwähnt.

Der Einsatz 2 ist im vollständig eingesetzten Zustand mit der Unterseite des Einsatzrandes 5 mit der Oberseite des Behälterrandes 4 in Anlage. Der auf der Unterseite des Einsatzrandes 5 gebildete stufenförmige Absatz 23 ist im eingesetztem Zustand mit den stufenförmigen Absatz 26 auf der Oberseite des Behälterrandes 4 in Anlage. Auf diese Weise dienen die stufenförmigen Absätze im Prinzip als Haltevorsprünge bzw. Haltevertiefungen zur seitlichen Fixierung des Einsatzes 2 gegenüber dem Behälter 1.

Der Einsatzrand 5 erstreckt sich dabei im Griffabschnitt, siehe Figuren 3 oder 4, weiter nach außen als der Behälterrand 4 im entsprechenden Griffabschnitt nach Figuren 5 oder 6, wodurch der Einsatzrand 5 über den Behälterrand 4 um eine maximale Länge 40 im Bereich von erster und zweiter Randkante 17 bzw. 18 nach Figur 3 bzw. Figur 5 übersteht.

Im eingesetzten Zustand ist der Einsatz 5 vom Boden 25 des Behälters 4 beabstandet, wobei vorzugsweise auch die Fußleisten 39 vom Boden 25 beabstandet sind.

Bei auf dem Einsatz 5 bzw. Behälter 4 aufgesetztem Deckel 3 ist die Unterseite des Deckelrandes 6 mit der Oberseite des Einsatzrandes 5 bzw. des Behälterrandes 4 in Anlage. Gleichzeitig ist der Haltevorsprung 24 mit den stufenförmigen Absatz 27 bzw. 26 zur seitlichen Sicherung des Deckels 3 auf Einsatz 5 bzw. Behälter 4 in Anlage.

Der Deckelrand 6 erstreckt sich um eine Länge 41 im Griffabschnitt 12 nach Figur 1 über erste bzw. zweite Randkante 17, 18 hinaus. Dadurch ist selektiv beispielsweise der Einsatz 2 mit aufgesetztem Deckel 3 aus dem Behälter 1 durch Untergreifen des um eine Länge 40 überstehenden Einsatzrandes 5 entnehmbar. Ebenso ist der Deckel 3 separat vom Einsatz 2 durch den um eine Länge 41 überstehenden Deckelrand 6 vom Einsatz 2 abhebbar. Ist der Einsatz 2 entfernt und ist der Deckel 3 direkt auf dem Einsatz 2 aufgelegt, kann der Deckel 3 durch Untergreifen des um eine zusammengesetzte Länge 40, 41 über den Behälterrand 4 überstehenden Deckelrand 6 vom Behälter 1 abgenommen werden.

Durch die Ausbildung von Haltevorsprung 24 und den als weiterer Haltevorsprung dienenden stufenförmige Absatz 23 ist gleichzeitig eine korrekte Zentrierung von Deckel zu Einsatz bzw. zu Behälter und von Einsatz zu Behälter gewährleistet. Dabei ist der stufenförmige Absatz 26 im Behälterrand 4 so ausgebildet, daß sowohl der stufenförmige Absatz 23 auf der Unterseite des Einsatzrandes 5 als auch der Haltevorsprung 24 auf der Unterseite des Deckelrandes 6 mit diesem in Anlage bringbar sind.

Ist wenigstens ein zum Einsatz 5 weiterer Einsatz vorgesehen, so sind die entsprechenden Ränder in den Griffabschnitten analog auszubilden, so daß entsprechend beispielsweise beide Einsätze mit Deckel dem Behälter entnommen werden können.

Außerdem können die Griffabschnitte zum selektiven Entnehmen eines oder mehrerer Behälter auch an unterschiedlichen Stellen entlang des entsprechenden Randes ausgebildet sein. So kann ein erster Einsatz durch Griffabschnitte wie oben beschrieben zusammen mit dem weiteren Einsatz dem Behälter entnommen werden. Zur Entnahme des weiteren Einsatzes kann dabei an anderer Stelle des Randes eine analoge Griffabschnittgestaltung vorgesehen sein, so daß durch entsprechendes Untergreifen des jeweiligen Randes der weitere Einsatz mit Deckel mit im Behälter verbleibenden Einsatz entnommen werden kann.

Statt der Verwendung eines Einsatzes mit Löchern und Schlitzen (Siebeinsatz) kann ebenfalls ein vollständig geschlossener Einsatz verwendet werden. Ebenso kann der weitere Einsatz ein vollständig geschlossener Einsatz sein. Weitere Kombinationen von Deckel, Einsätzen und Behälter mit entsprechenden Griffabschnitten sind leicht ausführbar.

## Patentansprüche

1. Behälter (1) mit wenigstens einem Einsatz (2) und einem wahlweise auf Einsatz (2) oder Behälter (1) aufsetzbaren Deckel (3), wobei Behälter, Einsatz und Deckel mit sich aufeinander abstützenden Rändern (4, 5, 6) und Griffbereichen (7, 8, 9) zum wahlweisen Ergreifen von Behälter, Einsatz oder Deckel ausgebildet sind,
**dadurch gekennzeichnet,**
daß die Griffbereiche (7, 8, 9) durch wenigstens einen Griffabschnitt (10, 11, 12) der Ränder (4, 5, 6) gebildet sind, in welchen der Deckelrand (6) über den Einsatzrand (5) und dieser über den Behälterrand (4) nach außen vorsteht.

2. Behälter nach Anspruch 1,
**dadurch gekennzeichnet,**
daß zwei Griffabschnitte (10, 11) auf gegenüberliegenden Seiten durch Ränder (4, 5, 6) von Behälter (1), Einsatz (2) und Deckel (3) ausgebildet sind.

3. Behälter nach Anspruch 1 oder 2,
**dadurch gekennzeichnet,**
daß die Ränder (4, 5, 6) zumindest im Griffabschnitt (10, 11) im wesentlichen nach außen abstehen und flach aufeinanderliegen.

4. Behälter nach wenigstens einem der vorangehenden Ansprüche,
**dadurch gekennzeichnet,**
daß Deckelrand (6) und/oder Einsatzrand (5) und/oder Behälterrand (4) jeweils entlang des gesamten Umfangs von Deckel (3), Einsatz (2) bzw. Behälter (1) nach außen abstehen und die Griffabschnitte (10, 11) beidseitig in Längsrichtung (13) des Behälters ausgebildet sind.

5. Behälter nach wenigstens einem der vorangehenden Ansprüche,
**dadurch gekennzeichnet,**
daß die Ränder (4, 5, 6) im wesentlichen horizontal vom Behälter (1), Einsatz (2) und Deckel (3) abstehen.

6. Behälter nach wenigstens einem der vorangehenden Ansprüche,
**dadurch gekennzeichnet,**
daß wenigstens ein weiterer Griffabschnitt durch die Ränder (4, 5, 6 gebildet ist, in welchem der Deckelrand (6) gegenüber dem Einsatzrand (5) und/oder dem Behälterrand (4) und/oder der Einsatzrand (5) gegenüber dem Behälterrand (4) nach innen versetzt endet.

7. Behälter nach wenigstens einem der vorangehenden Ansprüche,
**dadurch gekennzeichnet,**
daß Außenkanten (14, 15, 16) der Ränder (4, 5, 6) im Griffabschnitt (10, 11) zumindest teilweise miteinander fluchtend übereinander angeordnet sind.

8. Behälter nach wenigstens einem der vorangehenden Ansprüche,
**dadurch gekennzeichnet,**
daß die miteinander fluchtenden Außenkanten (14, 15, 16) konvex nach außen gekrümmt sind.

9. Behälter nach wenigstens einem der vorangehenden Ansprüche,
**dadurch gekennzeichnet,**
daß zwischen den miteinander fluchtenden Außenkanten (14, 15, 16) der Einsatzrand (5) eine erste im wesentlichen geradlinig verlaufende Randkante (17) und der Behälterrand (4) eine zweite nach außen konkav gekrümmte zweite Randkante (18) aufweist.

10. Behälter nach wenigstens einem der vorangehenden Ansprüche,
**dadurch gekennzeichnet,**
daß erste und zweite Randkante (17, 18) sich in Querrichtung (19) des Behälters (1) gleichweit erstrecken.

11. Behälter nach wenigstens einem der vorangehenden Ansprüche,
**dadurch gekennzeichnet,**
daß Deckelrand (6) und/oder Einsatzrand (5) und/oder Behälterrand (4) auf Ober- und/oder Unterseite (21, 22) im Griffabschnitt (10, 11) reibungserhöhende Oberflächenstrukturen (20) aufweisen.

12. Behälter nach wenigstens einem der vorangehenden Ansprüche,
**dadurch gekennzeichnet,**
daß auf der Unterseite (22) vom Deckelrand (6) und/oder vom Einsatzrand (5) zumindest stellenweise Haltevorsprünge (23, 24) zur seitlichen Halterung des Deckels (3) auf dem Einsatz (2) oder Behälter (1) bzw. zur seitlichen Halterung des Einsatzes (2) auf dem Behälter (1) ausgebildet sind.

13. Behälter nach wenigstens einem der vorangehenden Ansprüche,
**dadurch gekennzeichnet,**
daß der Einsatz (2) als Siebeinsatz ausgebildet ist.

14. Behälter nach wenigstens einem der vorangehenden Ansprüche,
**dadurch gekennzeichnet,**
daß der Siebeinsatz (2) beabstandet zum Boden (25) des Behälters (1) mittels des auf dem Behälterrand (4) aufliegenden Einsatzrandes (5) angeordnet ist.

15. Behälter nach wenigstens einem der vorangehenden Ansprüche,
**dadurch gekennzeichnet,**
daß den Haltevorsprüngen (23, 24) entsprechende Vertiefungen (26, 27) auf der Oberseite (21) des Einsatzrandes (5) und/oder des Behälterrandes (4) gebildet sind.

16. Behälter nach wenigstens einem der vorangehenden Ansprüche,
**dadurch gekennzeichnet,**
daß Haltevorsprung (23) und Vertiefung (27) des Einsatzrandes (5) sowie Vertiefung (26) des Behälterrandes (4) stufenförmig ausgebildet sind.
